# EUROPEAN PATENT APPLICATION

(11) **EP 4 779 862 A1**
(43) Date of publication of application: **22.07.2026**
(21) Application number: 25219002.0
(22) Date of filing: 27.11.2025
(51) Int. Cl.: H02P 29/62, H02P 29/68

(54) **MOTOR PREHEATING SYSTEM AND CONTROL METHOD THEREOF**

(30) Priority: 21.01.2025 US 202563747653 P; 07.08.2025 CN 202511102662
(71) Applicant: Delta Electronics, Inc., Taoyuan City 333 (TW)
(72) Inventor: Wu, Ping-Heng, 333 Taoyuan City (TW); Lee, Chia-Tse, 333 Taoyuan City (TW); Liu, Kuo-Ying, 333 Taoyuan City (TW); Hsing, Lei-Chung, 333 Taoyuan City (TW)
(74) Representative: Uexküll & Stolberg

(57) **Abstract**

A motor preheating system (1) and a control method are provided. The driving circuit (35) provides a direct current by the switch (351) to control the motor (2). The motor temperature control unit (31) performs an outer-loop control and includes a switch temperature limiter (313). The motor temperature control unit (31) generates a maximum switch temperature command (T5) according to a comparison result between a motor temperature feedback signal (T2) of the motor (2) and a motor temperature command (T1). The switch temperature control unit (32) performs a first inner-loop control and includes a current limiter (323). The switch temperature control unit (32) generates a maximum current command (T9) according to the maximum switch temperature command (T5) and a maximum switch temperature (T6) of the driving circuit (35). The current control unit (33) performs a second inner-loop control to control the driving circuit (35) according to the maximum current command (T9), so that the motor (2) is controlled. The maximum current command (T9) is a continuous output current.

## Description

### FIELD OF THE INVENTION

The present disclosure relates to a preheating system and a control method, and more particularly to a motor preheating system and a control method of the motor preheating system.

### BACKGROUND OF THE INVENTION

When the factory located in cold zone, the machine stops operating in the cold season. The shaft of the motor located in the machine is prone to freeze when the temperature is dropped. When the cold season is ended and the temperature is risen, and the machine located in the factory backs to resume normal operation, the drive located in the machine provides an instantaneous large torque to restart the shaft of the motor. However, the large instantaneous torque from the drive tends to trigger overcurrent protection. The damage to the machine is caused easily. To avoid the above situation, the machine includes a motor preheating system. The motor preheating system preheats the motor when the machine stops operating so as to prevent the motor from freezing in the cold season. Consequently, the motor is started up normally and immediately.

The conventional motor preheating system includes a motor and a drive. The drive of the motor preheating system heats the motor by injecting a direct current into the motor so as to prevent the motor from rotating during heating. The drive is configured to select state parameters such as the motor temperature command, the preheating current command, the preheating time and the preheating duty. Consequently, the motor is heated according to the state parameters.

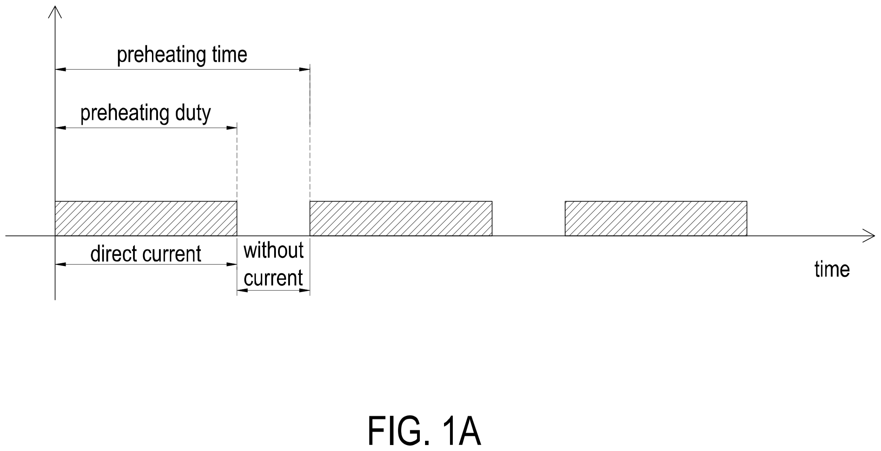

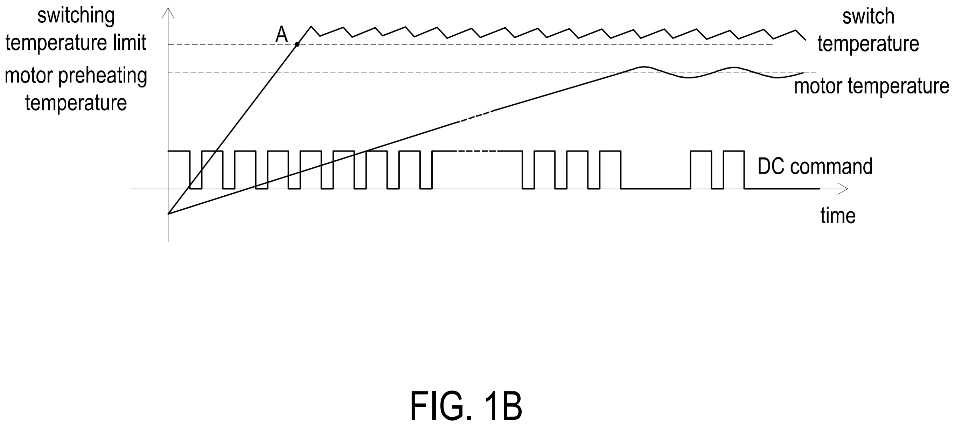

FIG. 1A is a schematic waveform diagram illustrating a pulse width modulation signal of the drive of the conventional motor preheating system. FIG. 1B is a schematic timing sequence illustrating the switching temperature, the motor temperature and the DC command of the conventional motor preheating system. As shown in FIG. 1A, the drive of the conventional motor preheating system provides a pulse width modulation (PWM) signal according to the motor temperature command, the preheating current command, the preheating time and the preheating duty. When the motor temperature is less than a preset motor temperature command, the drive provides the PWM signal to activate the preheating function. The drive controls the motor current served as a DC output. The drive stops providing the PWM signal when the motor temperature returns to the motor temperature command. When the motor temperature drops below the motor temperature command again, the preheating function is reactivated.

However, in the preheating function of the conventional motor preheating system, the DC command is switched by instantaneously turning on and off with a large current so as to control the motor, as shown in FIG. 1B. Under long-term operation, the temperature in the insulated-gate bipolar transistors (IGBTs) within the drive is significantly fluctuated. The service life of the drive switches is reduced. Moreover, according to component characteristics, the temperature rising rate of the insulated-gate bipolar transistors of the drive is greater than the temperature rising rate of the motor. When the DC is outputted continuously, the temperature of the insulated-gate bipolar transistors reaches the steady state earlier than the motor temperature. In the conventional motor preheating system, the preheating function relies on the user directly inputting a current command. The steady-state temperature of the insulated-gate bipolar transistors cannot be predicted. The temperature of the insulated-gate bipolar transistors cannot be controlled. Consequently, the insulated-gate bipolar transistors are prone to exceed the switching temperature limit, as shown the waveform after the point A of FIG. 1B. The insulated-gate bipolar transistors can be damaged easily. The design complexity is increased.

Therefore, there is a need of providing a motor preheating system and a control method of the motor preheating system to obviate the drawbacks encountered from the prior arts.

### SUMMARY OF THE INVENTION

The present disclosure provides a motor preheating system. The drive of the motor preheating system of the present disclosure includes a motor temperature control unit and a switch temperature control unit. The motor temperature control unit is configured to regulate and limit the motor temperature command and the motor temperature feedback signal provided by the motor to generate the maximum switch temperature command. The switch temperature control unit is configured to regulate and limit the maximum switch temperature command and the maximum switch temperature corresponding to the characteristics of the switch to generate the maximum current command. Consequently, the motor preheating system of the present disclosure limits the DC command below the maximum current command according to the maximum switch temperature command and the maximum current command. Consequently, the time interval between the turn-on state and the turn-off state of the switch is reduced. The damage to the switch caused by rapid temperature variation is avoided. The service life of the switch is improved. Moreover, the temperature of the switch of the driving circuit is limited to the maximum switch temperature command, so that the temperature variation of the switch is relatively reduced. The temperature of the switch is restricted within a safe range. Consequently, the failure possibility of the switch due to overheating is reduced. The service life of the switch is improved, and the design difficulty is reduced.

In accordance with an aspect of the present disclosure, a motor preheating system is provided. The motor preheating system includes a motor and a drive. The drive is configured to control the motor. The drive includes a driving circuit, a motor temperature control unit, a switch temperature control unit and a current control unit. The driving circuit includes at least one switch. The driving circuit is configured to provide a direct current by the at least one switch to control the motor. The motor temperature control unit is configured to perform an outer-loop control and includes a switch temperature limiter. The motor temperature control unit is configured to generate a maximum switch temperature command according to a comparison result between a motor temperature feedback signal of the motor and a motor temperature command. The switch temperature control unit is configured to perform a first inner-loop control and includes a current limiter. The switch temperature control unit is configured to generate a maximum current command according to the maximum switch temperature command and a maximum switch temperature of the driving circuit. The current control unit is configured to perform a second inner-loop control to control the driving circuit according to the maximum current command, so that the motor is controlled. The maximum current command is a continuous output current.

In accordance with another aspect of the present disclosure, a control method is provided. The control method is applied to a motor preheating system. The motor preheating system includes a motor and a drive. The drive is configured to control the motor and includes a driving circuit. The driving circuit includes at least one switch. The driving circuit is configured to provide a direct current by the at least one switch to control the motor. The control method includes the following steps. Firstly, an outer-loop control is performed by a motor temperature control unit of the drive. A maximum switch temperature command is generated according to a comparison result between a motor temperature feedback signal of the motor and a motor temperature command by a switch temperature limiter of the motor temperature control unit. Then, a first inner-loop control is performed by a switch temperature control unit of the drive. A maximum current command is generated according to the maximum switch temperature command and a maximum switch temperature of the driving circuit by a current limiter of the switch temperature control unit. Then, a second inner-loop control is performed by a current control unit of the drive. The driving circuit is controlled according to the maximum current command so as to control the motor. The maximum current command is a continuous output current.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1A is a schematic waveform diagram illustrating a pulse width modulation signal of the drive of the conventional motor preheating system;
FIG. 1B is a schematic timing sequence illustrating the switching temperature, the motor temperature and the DC command of the conventional motor preheating system;
FIG. 2 is a schematic circuit diagram illustrating the motor preheating system of the present disclosure;
FIG. 3 is a schematic diagram illustrating the relationship between the temperature variation and the cycle numbers of temperature variation of the switch of the drive of the motor preheating system of FIG. 2;
FIG. 4 is a schematic timing sequence illustrating the switch temperature, the motor temperature and the maximum current command of the motor preheating system of FIG. 2;
FIG. 5 is a flowchart illustrating the control method of the motor preheating system of FIG. 2;
FIG. 6 is a flowchart illustrating the sub-step of the step S1 in the control method of the motor preheating system of FIG. 5;
FIG. 7 is a flowchart illustrating the sub-step of the step S2 in the control method of the motor preheating system of FIG. 5; and
FIG. 8 is a flowchart illustrating the sub-step of the step S3 in the control method of the motor preheating system of FIG. 5.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

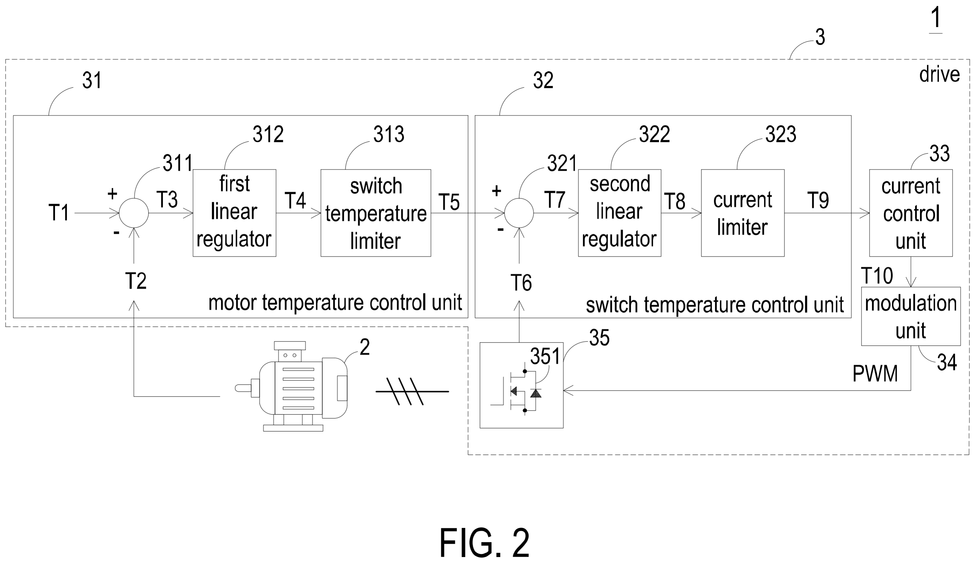

FIG. 2 is a schematic circuit diagram illustrating the motor preheating system of the present disclosure. As shown in FIG. 2, the motor preheating system 1 includes a motor 2 and a drive 3. The drive 3 provides a direct current (DC) to control the motor 2 according to temperature feedback of the motor 2. Consequently, the motor 2 is heated without rotation. The drive 3 includes one outer-loop control layer and two inner-loop control layers. The execution of the inner-loop control and the outer-loop control will be described below. The drive 3 includes a motor temperature control unit 31, a switch temperature control unit 32, a current control unit 33, a modulation unit 34 and a driving circuit 35.

The driving circuit 35 includes at least one switch 351. A single switch 351 is shown in FIG. 2 as an example. The switch 351 is but not limited to an insulated gate bipolar transistor (IGBT), a diode or a metal-oxide-semiconductor field-effect transistor (MOSFET). The driving circuit 35 is configured to provide a direct current by the operation of the at least one switch 351 so as to control the motor 2. The motor temperature control unit 31 is configured to perform outer-loop control and connected with the motor 2. The motor temperature control unit 31 includes a first subtractor 311, a first linear regulator 312 and a switch temperature limiter 313. The first subtractor 311 is configured to receive a preset motor temperature command T1 of the drive 3 and a motor temperature feedback signal T2 provided from the motor 2. The first subtractor 311 is configured to subtract the motor temperature command T1 to the motor temperature feedback signal T2 so as to generate a first temperature difference T3. The first linear regulator 312 is configured to regulate the first temperature difference T3 provided by the first subtractor 311 linearly so as to generate a switch temperature command T4. The switch temperature limiter 313 is configured to limit the switch temperature command T4 provided by the first linear regulator 312 so as to generate a maximum switch temperature command T5. The maximum switch temperature command T5 is utilized to limit and protect the at least one switch 351 of the driving circuit 35. The maximum switch temperature command T5 is generated according to the characteristics of the at least one switch 351 of the driving circuit 35.

The switch temperature control unit 32 is configured to perform a first inner-loop control and connected with the motor temperature control unit 31. The switch temperature control unit 32 includes a second subtractor 321, a second linear regulator 322 and a current limiter 323. The second subtractor 321 is configured to receive the maximum switch temperature command T5 provided by the switch temperature limiter 313 and the maximum switch temperature T6 corresponding to the characteristics of the at least one switch 351. The second subtractor 321 is configured to subtract the maximum switch temperature command T5 to the maximum switch temperature T6 so as to generate a second temperature difference T7. The second linear regulator 322 is configured to regulate the second temperature difference T7 provided by the second subtractor 321 linearly so as to generate a DC command T8. The current limiter 323 is configured to regulate the DC command T8 provided by the second linear regulator 322 linearly so as to generate a maximum current command T9. The maximum current command T9 is utilized to limit and protect the operation capability of the drive 3. The maximum current command T9 is a continuous output current. The maximum current command T9 is less than a preset current output limit in the drive 3, and will be described below.

The current control unit 33 is configured to generate a current control signal T10 according to the maximum current command T9 provided by the current limiter 323 of the switch temperature control unit 32. The modulation unit 34 is configured to output a pulse width modulation signal PWM according to the current control signal T10 provided by the current control unit 33. The pulse width modulation signal PWM controls the at least one switch 351 of the driving circuit 35, and further control the motor 2. The pulse width modulation signal PWM controls the switching frequency of the at least one switch 351 to be greater than 1 kHz. Consequently, the dead time between the turn-on state and the turn-off state of the at least one switch 351 is between 125 µs and 1000 µs. Consequently, the at least one switch 351 is prevented from being damaged due to rapid cooling when the at least one switch 351 remains the turn-off state for a long time.

Since the temperature variation of the at least one switch 351 in the driving circuit 35 is greater than the temperature variation of the motor 2, the temperature of the at least one switch 351 needs to be raised before heating the motor 2. Consequently, the motor temperature control unit 31 is served as the basis of the outer-loop control of the drive 3. For increasing the temperature of the at least one switch 351 and protecting the motor 2, the switch temperature control unit 32 is served as the basis of the first inner-loop control of the drive 3. The current control unit 33 and the modulation unit 34 are served as the basis of the second inner-loop control of the drive 3.

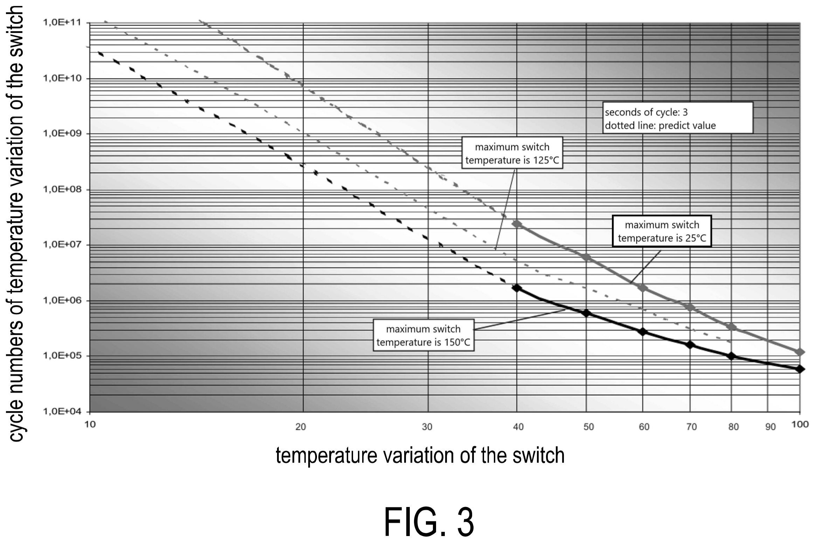

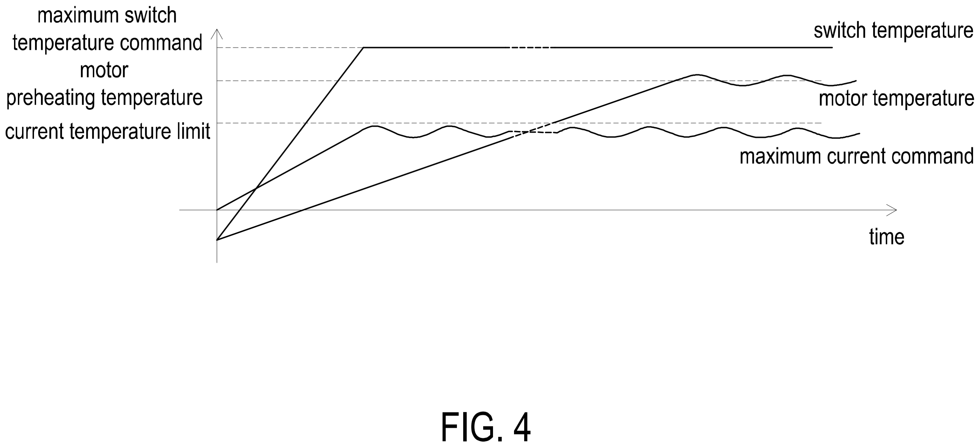

FIG. 3 is a schematic diagram illustrating the relationship between the temperature variation and the cycle numbers of temperature variation of the switch of the drive of the motor preheating system of FIG. 2. FIG. 4 is a schematic timing sequence illustrating the switch temperature, the motor temperature and the maximum current command of the motor preheating system of FIG. 2. As shown in FIG. 3, the three curves respectively represent the corresponding temperature variations and the cycle numbers of temperature variation of the switch 351 when the maximum switch temperature is 150°C, 125°C, and 25°C. Taking the curve corresponding to the maximum switch temperature of 150°C as an example, when the switch temperature decreases from 150°C to 120°C, the corresponding temperature variation is 30°C (i.e., 150°C minus 120°C). When the temperature subsequently increases from 120°C back to 150°C, the process of decreasing and then increasing in temperature is defined as one cycle of temperature variation. In this embodiment, one cycle time is 3 seconds. As shown in FIG. 3, when the temperature variation is reduced (i.e., the temperature difference is reduced), the switch 351 has an increased cycle number of temperature variation. For example, when the temperature variation is 20°C, 30°C and 40°C, the corresponding cycle numbers of temperature variation is 1.0E+08, 1.0E+07 and 1.0E+06, respectively. Namely, when the temperature variation is increased, the damage to the switch 351 is more severe, and the cycle numbers of temperature variation that the switch 351 withstanding is decreased. As shown in FIG. 4, the maximum current command T9 outputted by the switch temperature control unit 32 of the drive 3 of the motor preheating system 1 is a continuous command and controlled to be less than the current temperature limit. Consequently, the number of the turn-on state and the turn-off state of the switch 351 is reduced. The damage to the switch 351 caused by rapid cooling is avoided. The service life of the switch 351 of the driving circuit 35 is improved. Moreover, the temperature of the at least one switch 351 of the driving circuit 35 is limited to the maximum switch temperature command T5, so that the temperature variation of the switch 351 is relatively reduced. The temperature of the switch 351 is restricted within a safe range. Consequently, the failure possibility of the switch 351 due to overheating is reduced. The service life of the switch 351 is improved, and the design difficulty is reduced.

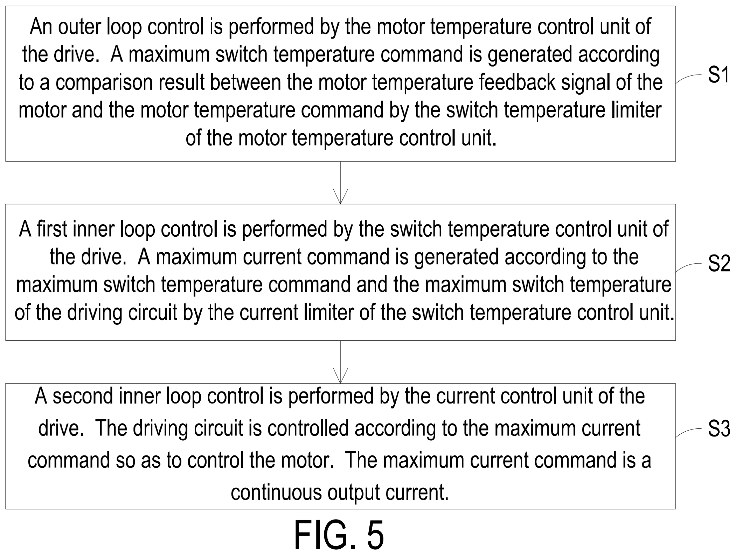

FIG. 5 is a flowchart illustrating the control method of the motor preheating system of FIG. 2. As shown in FIG. 5, the motor preheating system 1 of the present disclosure executes the following control method. Firstly, a step S1 is performed. In the step S1, an outer-loop control is performed by the motor temperature control unit 31 of the drive 3. A maximum switch temperature command T5 is generated according to a comparison result between the motor temperature feedback signal T2 of the motor 2 and the motor temperature command T1 by the switch temperature limiter 313 of the motor temperature control unit 31. Then, a step S2 is performed. In the step S2, a first inner-loop control is performed by the switch temperature control unit 32 of the drive 3. A maximum current command T9 is generated according to the maximum switch temperature command T5 and the maximum switch temperature T6 of the driving circuit 35 by the current limiter 323 of the switch temperature control unit 32. Then, a step S3 is performed. In the step S3, a second inner-loop control is performed by the current control unit 33 of the drive 3. The driving circuit 35 is controlled according to the maximum current command T9 so as to control the motor 2. Please refer to FIG. 4, the maximum current command T9 is a continuous output current.

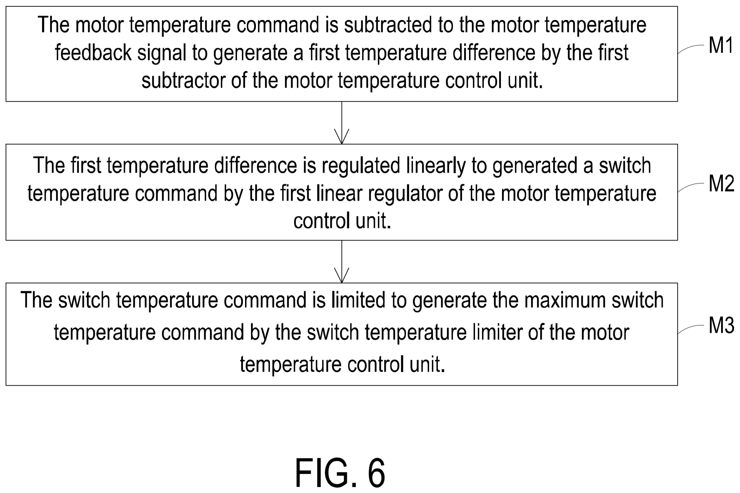

FIG. 6 is a flowchart illustrating the sub-step of the step S1 in the control method of the motor preheating system of FIG. 5. As shown in FIG. 6, the step S1 in FIG. 5 further includes the following sub-steps. Firstly, a sub-step M1 is performed. In the sub-step M1, the motor temperature command T1 is subtracted to the motor temperature feedback signal T2 to generate a first temperature difference T3 by the first subtractor 311 of the motor temperature control unit 31. Then, a sub-step M2 is performed. In the sub-step M2, the first temperature difference T3 is regulated linearly to generated a switch temperature command T4 by the first linear regulator 312 of the motor temperature control unit 31. Then, a sub-step M3 is performed. In the sub-step M3, the switch temperature command T4 is limited to generate the maximum switch temperature command T5 by the switch temperature limiter 313 of the motor temperature control unit 31.

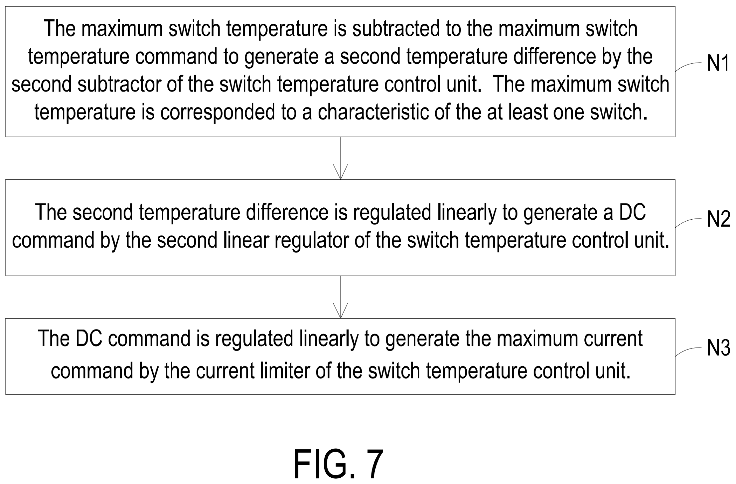

FIG. 7 is a flowchart illustrating the sub-step of the step S2 in the control method of the motor preheating system of FIG. 5. As shown in FIG. 7, the step S2 in FIG. 5 further includes the following sub-steps. Firstly, a sub-step N1 is performed. In the sub-step N1, the maximum switch temperature T6 is subtracted to the maximum switch temperature command T5 to generate a second temperature difference T7 by the second subtractor 321 of the switch temperature control unit 32. The maximum switch temperature T6 is corresponded to the characteristics of the at least one switch 351. Then, a sub-step N2 is performed. In the sub-step N2, the second temperature difference T7 is regulated linearly to generate a DC command T8 by the second linear regulator 322 of the switch temperature control unit 32. Then, a sub-step N3 is performed. In the sub-step N3, the DC command T8 is regulated linearly to generate the maximum current command T9 by the current limiter 323 of the switch temperature control unit 32.

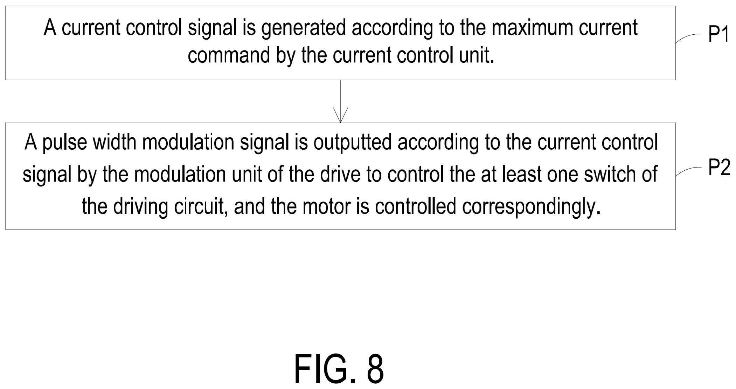

FIG. 8 is a flowchart illustrating the sub-step of the step S3 in the control method of the motor preheating system of FIG. 5. As shown in FIG. 8, the step S3 in FIG. 5 further includes the following sub-steps. Firstly, a sub-step P1 is performed. In the sub-step P1, a current control signal T10 is generated according to the maximum current command T9 by the current control unit 33. Then, a sub-step P2 is performed. In the sub-step P2, a pulse width modulation signal PWM is outputted according to the current control signal T10 by the modulation unit 34 of the drive 3 to control the at least one switch 351 of the driving circuit 35, and the motor 2 is controlled correspondingly.

As mentioned above, the present disclosure discloses a motor preheating system. The drive of the motor preheating system of the present disclosure includes a motor temperature control unit and a switch temperature control unit. The motor temperature control unit is configured to regulate and limit the motor temperature command and the motor temperature feedback signal provided by the motor to generate the maximum switch temperature command. The switch temperature control unit is configured to regulate and limit the maximum switch temperature command and the maximum switch temperature corresponding to the characteristics of the switch to generate the maximum current command. Consequently, the motor preheating system of the present disclosure limits the DC command below the maximum current command according to the maximum switch temperature command and the maximum current command. Consequently, the time interval between the turn-on state and the turn-off state of the switch is reduced. The damage to the switch caused by rapid temperature variation is avoided. The service life of the switch is improved. Moreover, the temperature of the switch of the driving circuit is limited to the maximum switch temperature command, so that the temperature variation of the switch is relatively reduced. The temperature of the switch is restricted within a safe range. Consequently, the failure possibility of the switch due to overheating is reduced. The service life of the switch is improved, and the design difficulty is reduced.

## Claims

1. A motor preheating system (1), **characterized by** comprising:
a motor (2); and
a drive (3) configured to control the motor (2), and comprising:
a driving circuit (35) comprising at least one switch (351), wherein the driving circuit (35) is configured to provide a direct current by the at least one switch (351) to control the motor (2);
a motor temperature control unit (31) configured to perform an outer-loop control and comprising a switch temperature limiter (313), wherein the motor temperature control unit (31) is configured to generate a maximum switch temperature command (T5) according to a comparison result between a motor temperature feedback signal (T2) of the motor (2) and a motor temperature command (T1);
a switch temperature control unit (32) configured to perform a first inner-loop control and comprising a current limiter (323), wherein the switch temperature control unit (32) is configured to generate a maximum current command (T9) according to the maximum switch temperature command (T5) and a maximum switch temperature (T6) of the driving circuit (35); and
a current control unit (33) configured to perform a second inner-loop control to control the driving circuit (35) according to the maximum current command (T9), so that the motor (2) is controlled, wherein the maximum current command (T9) is a continuous output current.

2. The motor preheating system (1) according to claim 1, wherein the motor temperature control unit (31) further comprises a first subtractor (311) and a first linear regulator (312), wherein the first subtractor (311) is configured to subtract the motor temperature command (T1) to the motor temperature feedback signal (T2) to generate a first temperature difference (T3), the first linear regulator (312) is configured to regulate the first temperature difference (T3) linearly to generate a switch temperature command (T4), and the switch temperature limiter (313) is configured to limit the switch temperature command (T4) to generate the maximum switch temperature command (T5).

3. The motor preheating system (1) according to claim 2, wherein the switch temperature control unit (32) further comprises a second subtractor (321) and a second linear regulator (322), wherein the second subtractor (321) is configured to subtract the maximum switch temperature command (T5) to the maximum switch temperature (T6) to generate a second temperature difference (T7), the second linear regulator (322) is configured to regulate the second temperature difference (T7) linearly to generate a DC command (T8), and the current limiter (323) is configured to regulate the DC command (T8) linearly to generate the maximum current command (T9), wherein the maximum switch temperature (T6) is corresponded to a characteristic of the at least one switch (351).

4. The motor preheating system (1) according to claim 3, wherein the drive (3) further comprises a modulation unit (34), the current control unit (33) is configured to generate a current control signal (T10) according to the maximum current command (T9), and the modulation unit (34) is configured to output a pulse width modulation signal (PWM) according to the current control signal (T10) to control the at least one switch (351) of the driving circuit (35), so that the motor (2) is controlled.

5. The motor preheating system (1) according to claim 4, wherein a switch frequency of the pulse width modulation signal (PWM) is greater than 1 KHz.

6. The motor preheating system (1) according to claim 4, wherein a dead time between a turn-on state and a turn-off state of the at least one switch (351) is between 125 µs and 1000 µs.

7. A control method applied to a motor preheating system (1), the motor preheating system (1) comprising a motor (2) and a drive (3), the drive (3) configured to control the motor (2) and comprising a driving circuit (35), the driving circuit (35) comprising at least one switch (351) and configured to provide a direct current by the at least one switch (351) to control the motor (2), and **characterized in that** the control method comprises steps of:
performing an outer-loop control by a motor temperature control unit (31) of the drive (3), and generating a maximum switch temperature command (T5) according to a comparison result between a motor temperature feedback signal (T2) of the motor (2) and a motor temperature command (T1) by a switch temperature limiter (313) of the motor temperature control unit (31);
performing a first inner-loop control by a switch temperature control unit (32) of the drive (3), and generating a maximum current command (T9) according to the maximum switch temperature command (T5) and a maximum switch temperature (T6) of the driving circuit (35) by a current limiter (323) of the switch temperature control unit (32); and
performing a second inner-loop control by a current control unit (33) of the drive (3), and controlling the driving circuit (35) according to the maximum current command (T9) so as to control the motor (2), wherein the maximum current command (T9) is a continuous output current.

8. The control method according to claim 7, wherein performing the outer-loop control further comprises the steps of:
subtracting the motor temperature command (T1) to the motor temperature feedback signal (T2) to generate a first temperature difference (T3) by a first subtractor (311) of the motor temperature control unit (31);
regulating the first temperature difference (T3) linearly to generated a switch temperature command (T4) by a first linear regulator (312) of the motor temperature control unit (31); and
limiting the switch temperature command (T4) to generate the maximum switch temperature command (T5) by the switch temperature limiter (313) of the motor temperature control unit (31).

9. The control method according to claim 8, wherein performing the first inner-loop control further comprises the steps of:
subtracting the maximum switch temperature (T6) to the maximum switch temperature command (T5) to generate a second temperature difference (T7) by a second subtractor (321) of the switch temperature control unit (32), wherein the maximum switch temperature (T6) is corresponded to a characteristic of the at least one switch (351);
regulating the second temperature difference (T7) linearly to generate a DC command (T8) by a second linear regulator (322) of the switch temperature control unit (32); and
regulating the DC command (T8) linearly to generate the maximum current command (T9) by the current limiter (323) of the switch temperature control unit (32).

10. The control method according to claim 9, wherein performing the second inner-loop control further comprises the steps of:
generating a current control signal (T10) according to the maximum current command (T9) by the current control unit (33); and
outputting a pulse width modulation signal (PWM) according to the current control signal (T10) by a modulation unit (34) of the drive (3) to control the at least one switch (351) of the driving circuit (35), and controlling the motor (2) correspondingly.
